(19) Europäisches Patentamt
European Patent Office
Office européen des brevets

(11) **EP 1 717 059 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(51) Int Cl.:
**B44B 7/00** *(2006.01)*     **B23K 26/00** *(2006.01)*
**B23K 26/40** *(2006.01)*

(21) Anmeldenummer: **05009208.9**

(22) Anmeldetag: **27.04.2005**

(54) **Suboberflächenmarkierungen in einem transparenten Körper**

Sub-surface markings in a transparent body

Marquages en-dessous de la surface d'un corps transparent

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**02.11.2006 Patentblatt 2006/44**

(73) Patentinhaber: **Vitro Laser Technologies AG**
**32423 Minden (DE)**

(72) Erfinder: **Rémy, Renaud**
**32479 Hille (DE)**

(74) Vertreter: **Nunnenkamp, Jörg et al**
**Andrejewski - Honke**
**Patent- und Rechtsanwälte**
**P.O. Box 10 02 54**
**45002 Essen (DE)**

(56) Entgegenhaltungen:
| | |
|---|---|
| WO-A-92/03297 | DD-A- 237 972 |
| DE-A- 4 405 203 | DE-A1- 19 925 801 |
| US-A- 4 092 518 | US-A- 4 467 172 |
| US-A- 5 343 483 | US-A- 5 637 244 |
| US-B1- 6 490 299 | |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Einbringen von Suboberflächenmarkierungen in einen transparenten Materialkörper, wonach mittels jeweiliger Anregungsimpulse eine optische Pumpquelle für ein Lasermaterial beaufschlagt wird, um im Lasermaterial Besetzungsinversion von einzelnen Laserniveaus zu erzeugen, wonach ferner der hierdurch erzeugte gepulste Laserstrahl ins Innere des Materialkörpers so fokussiert wird, dass der Laserstrahl die Zerstörungsschwelle des Materialkörpers wenigstens im jeweiligen Fokuspunkt unter Bildung einer permanenten Markierung überschreitet, und wonach einzelne Markierungen in Folge einer Relativbewegung zwischen dem Laserstrahl und dem Materialkörper eine frei wählbare Innengravur formen.

Ein derartiges Verfahren ist bekannt, wozu nur beispielhaft auf die US-PS 4 467 172 oder die DD 237 972 A3 verwiesen sei. Auch die US-PS 5 637 244 befasst sich mit solchen laserbasierten Verfahren zum Einbringen einen Innengravur in einen Materialkörper. Dieser kann aus Glas gefertigt sein, so dass man hier von Glasinnengravur spricht. Selbstverständlich können auch Kunststoffmaterialien zum Einsatz kommen, wie sie Gegenstand der US-PS 4 092 518 sind. Die Innengravur mag eindimensional, zweidimensional oder auch dreidimensional im Innern des Materialkörpers vorliegen. Das hängt von der Relativbewegung zwischen dem Laserstrahl und dem Materialkörper ab.

Im Rahmen der genannten US-PS 5 637 244 wird bereits das Ziel verfolgt, die aus den einzelnen Markierungen zusammengesetzte Innengravur optisch zu verändern, indem die einzelnen Markierungen in ihrer Größe eine Veränderung erfahren. Um dies im Detail zu realisieren, wird auf eine Optikeinheit zurückgegriffen, um die Fokuslänge zu verändern. Auf diese Weise können Markierungen im Durchmesserbereich zwischen 0,1 und 0,4 mm hergestellt werden. Allerdings ist der konstruktive Aufwand beträchtlich. Außerdem lässt die Präzision beim Einbringen der Markierungen und ihr Erscheinungsbild zu wünschen übrig.

Ungeachtet dessen beschreibt die US 6 490 299 B1 eine Vorgehensweise zur Erzeugung von Laserstrahlung mit spezifischer zeitlicher Gestalt um qualitativ hochwertige laserinduzierte Markierungen zu erzeugen. In diesem Zusammenhang werden zwei Laserausgangspulse produziert, von denen einer ein Q-Switch-Puls und der andere ein Freilaser-Puls ist. Um unterschiedliche Grauschattierungen der jeweiligen Markierungen zu erzeugen, wird das Verhältnis der Energie des Q-Switch-Pulses im Vergleich zu derjenigen des freien Laserpulses eingestellt.

Schließlich befasst sich die DE 199 25 801 B4 mit einem Verfahren zur regelbaren Veränderung der Punktgröße bei der Laser-Innengravur. In diesem Zusammenhang wird für jeden Lasertyp die wirksame Pulslänge beginnend mit dem Zeitpunkt der Zündung des Plasmas bis zu seiner vorzeitigen Beendigung der Plasmaeinwirkung in dem Material geregelt.

Der Erfindung liegt das technische Problem zugrunde, ein derartiges Verfahren so weiter zu entwickeln, dass sich die einzelnen Markierungen auf einfache Weise optisch verändern lassen, insbesondere hinsichtlich ihrer Größe, und zwar einwandfrei reproduzierbar und mit überzeugenden optischen Eigenschaften. Darüber hinaus soll eine geeignete Vorrichtung geschaffen werden.

Zur Lösung dieser technischen Problemstellung ist ein gattungsgemäßes Verfahren zum Einbringen von Suboberflächenmarkierungen in einen transparenten Materialkörper dadurch gekennzeichnet, dass ein Entladungsimpuls mit Hilfe einer Güteschaltung optische Verluste in einem Laserresonator moduliert, wobei der jeweilige Laserpuls durch den gegenüber dem Anregungsimpuls einstellbar verzögerten Entladungsimpuls hinsichtlich seiner Pulsenergie verändert wird und somit Markierungen mit je nach Pulsenergie unterschiedlichen optischen Eigenschaften erzeugt, und wobei eine abfallende Flanke des Anregungsimpulses als Startimpuls für die einstellbare Verzögerungszeit (V) bis zum Beginn des Entladungsimpulses (E) genutzt wird.

Der Anregungsimpuls dient - wie der Name bereits sagt - dazu, im Lasermaterial für den eigentlichen Laservorgang obligatorische Besetzungsinversion der einzelnen Laserniveaus zu erzeugen. Dabei stellt man üblicherweise die Pulsdauer $T_P$ des betreffenden Anregungsimpulses so ein, dass sie die Lebensdauer eines oberen Niveaus eines zugehörigen Laserüberganges unterschreitet. Die Wiederholrate der Anregungsimpulse bzw. ihre Periodendauer $T_D$ ist dagegen meistens größer als die (doppelte) Lebensdauer des betreffenden oberen Niveaus bemessen, so dass es insgesamt zu der gewünschten Besetzungsinversion kommt.

Durch die beschriebene Bemessungsregel für die Pulsdauer $T_P$ und die Periodendauer $T_D$ des Anregungsimpulses wird erreicht, dass die Besetzungsinversion nicht statisch vorliegt, sondern dem Anregungsimpuls mehr oder minder folgt.

Wenn nun mit einer einstellbaren Verzögerungszeit des jeweiligen Entladungsimpulses gegenüber dem Anregungsimpuls gearbeitet wird, so tritt aus dem Laserresonator die gewünschte Laserstrahlung aus, weil der Entladungsimpuls die im Laserübergang gespeicherte Energie freisetzt. D.h., der Entladungsimpuls bewirkt einen einzelnen Laserpuls ausgangsseitig des Laserresonators und gibt dessen Dauer vor. Tatsächlich lassen sich mit dem jeweiligen Entladungsimpuls optische Verluste in einem zugehörigen Laserresonator modulieren. Da der Entladungsimpuls dem Anregungsimpuls folgt, hängt die Pulsenergie der ausgesandten Laserstrahlung letztlich von der einstellbaren Verzögerungszeit zwischen dem Anregungsimpuls und dem Entladungsimpuls ab.

Da die Pulsdauer Tp des Anregungsimpulses geringer als die Lebensdauer S des obersten Laserniveaus des eingesetzten Lasermaterials bemessen ist, also

$$T_P < S$$

gilt, nimmt die mit dem Anregungsimpuls hergestellte Besetzungsinversion, beispielsweise infolge von thermischen Relaxationen, meistens exponentiell ab. Anders ausgedrückt, fällt die Besetzung des obersten Laserniveaus im Anschluss an die abfallende Flanke des Anregungsimpulses exponentiell ab. Dagegen folgt die ansteigende Flanke der Besetzung des obersten Laserniveaus mehr oder minder der ansteigenden Flanke des Anregungsimpulses.

Als Folge hiervon ändert sich natürlich auch die Energie des mit dem Entladungsimpuls erzeugten Laserpulses, Je nachdem, in weichem Bereich des zuvor beschriebenen exponentiellen Abfalls der Besetzungsinversion der Entladungsimpuls zeitlich angesiedelt ist, wird auch die Pulsenergie entsprechend geringer ausfallen. D.h., die einstellbare Verzögerung zwischen dem Anregungsimpuls und dem Entladungsimpuls gibt unmittelbar die Pulsenergie des erzeugten einzelnen Laserpulses vor.

Wenn man den vorgenannten Rückgang der Besetzungsinversion im Anschluss an die abfallende Flanke des Anregungsimpulses mathematisch in Abhängigkeit von dem Lasermaterial angeben kann, so lässt sich über die Verzögerungszeit zwischen der besagten abfallenden Flanke des Anregungsimpulses und der ansteigenden Flanke des Entladungsimpulses die ausgangsseitige Pulsenergie des solchermaßen erzeugten Laser-Monopulses voraussagen. In der Regel geht man hier jedoch experimentell, beispielsweise im Sinne eines geschlossenen Regelkreises, vor. Das kann so aussehen, dass eine gemeinsame Steueranlage sowohl den Anregungsimpuls zur Erzeugung der Besetzungsinversion im Lasermaterial als auch den Entladungsimpuls sowie die zwischen beiden Impulsen liegende Verzögerungszeit vorgibt. Wenn nun noch ausgangsseitig des Laserresonators die Pulsenergie gemessen wird, kann durch Einstellen der Verzögerungszeit die gewünschte Pulsenergie im Sinne eines geschlossenen Regelkreises vorgegeben werden.

Mit Hilfe des Anregungsimpulses werden in der Regel und nicht einschränkend meistens im Sichtbaren emittierende (Halbleiter-)Dioden beaufschlagt, die als optische Pumpquelle für das eigentliche Lasermaterial fungieren und hier die erforderliche und bereits angesprochene Besetzungsinversion zwischen den gewünschten Laserniveaus erzeugen. Tatsächlich empfiehlt die Erfindung die Verwendung eines gütegeschalteten, diodengepumpten Festkörperlasers. Als Festkörpermaterialien können Nd:YAG- oder Nd:YLF-Kristalle eingesetzt werden. Das stellt jedoch keine Einschränkung dar, so dass grundsätzlich auch Flüssigkeitslaser oder Gaslaser zum Einsatz kommen können.

Mit Hilfe der Güteschaltung (Q-Switching) kann die optische Güte (Verluste) des Laserresonators so verändert bzw. moduliert werden, dass nur für kurze Zeit eine Rückkopplung und damit ein Laserstrahl möglich wird. Der Entladungsimpuls steuert nun diese Güteschaltung, die als akusto-optischer oder elektro-optischer Modulator oder allgemein aktiver Lichtschalter ausgeführt sein mag. Ganz besonders bevorzugt ist der Einsatz einer Pockels-Zelle zur Einzelimpulsselektion.

Ohne die beschriebene Güteschaltung würde den Laserresonator ein Laserpulszug verlassen, welcher im Wesentlichen dem Anregungsimpuls zur Erzeugung der Besetzungsinversion im Lasermaterial folgt. Mit hilfe der Güteschaltung bzw. Pockels-Zelle können nun jedoch Laser-Monopulse mit durch die Verzögerungszeit vorgegebener Pulsenergie ausgangsseitig erzeugt werden. Gleichzeitig steuert die Dauer des zugehörigen Entladungsimpulses auch die Dauer des resultierenden Laser-Monopulses.

Im Übrigen ist es denkbar, die Wellenlänge der ausgangsseitigen Laserstrahlung (zumindest in gewissen Grenzen) zu variieren. Tatsächlich emittieren die an dieser Stelle in der Regel eingesetzten Festkörperlaser (Nd:YAG) bei einer Wellenlänge von beispielsweise 1 064 nm. Durch eine Frequenzverdoppelung in einem nichtlinearen optischen Kristall aus beispielsweise KDP (Kaliumdihydrogenphosphat) lassen sich Ausgangswellenlängen von ca. 532 nm darstellen. Verändert man die. Temperatur des vorgenannten frequenzverdoppelnden Kristalls, so lässt sich auch die Ausgangswellenlänge der Laserstrahlung (in gewissen Grenzen) verändern. Die entsprechende Temperatursteuerung nimmt wiederum die Steueranlage vor, die im Ergebnis in der Lage ist, ausgangsseitige Laser-Monopulse gewünschter Energie, Pulsdauer und schließlich auch Wellenlänge vorzugeben.

Mit diesen Laser-Monopulsen wird nun der transparente Materialkörper bearbeitet und werden die jeweiligen Markierungen in seinem Inneren erzeugt. Dabei mag jede einzelne Markierung zu einem Laser-Monopuls korrespondieren. Als Folge der unterschiedlichen Pulsenergien einzelner Laser-Monopulse können nun variierende Markierungen erzeugt werden. Tatsächlich korrespondieren die in den Materialkörper eingebrachten Markierungen in der Regel zu kreisförmigen Inhomogenitäten, deren Radius sich jeweils in Abhängigkeit von der eingestrahlten Pulsenergie bei ihrer Erzeugung verändert.

Üblicherweise handelt es sich bei den kreis- bzw, kugelförmigen Inhomogenitäten um eingeschlossene Bläschen, deren Radius bzw. Durchmesser eine Funktion der Pulsenergie ist. Üblicherweise ist das Bläschen um so größer, je größer die Pulsenergie bei seiner Erzeugung war. Dabei muss man die Pulsenergie in der Regel überproportional steigern, um einen Zuwachs im Radius bzw. Durchmesser des Bläschens zu erreichen. Das erklärt sich aufgrund der Tatsache, dass das Volumen der Bläschen kubisch vom Radius abhängt.

Als Folge hiervon ändert sich auch das optische Erscheinungsbild der insgesamt aus den einzelnen permanenten Markierungen erzeugten Innengravur. Je nach Größe des Bläschens erscheint ein zugehöriger Punkt mehr oder weniger hell, wenn der transparente Materialkörper beispielsweise mit einer Weißlichtquelle durchstrahlt oder bestrahlt wird. Dabei drückt der Begriff "transparent" aus, dass der Materialkörper in der Regel und nicht einschränkend für das Auge durchsichtig erscheint, also im sichtbaren Bereich durchsichtig ist. Selbstverständlich werden vom Erfindungsgedanken auch Varianten dergestalt umfasst, dass der jeweilige Materialkörper beispielsweise nur mit Hilfsmitteln durchsichtig wird, wobei an dieser Stelle eine Infrarot-Kamera denkbar ist. In der Regel meint transparent jedoch, dass elektromagnetische Strahlung im Bereich von ca. 400 nm bis 800 nm, d.h. im sichtbaren Bereich, praktisch verlustfrei passieren kann.

Sobald nun jedoch die beschriebenen Markierungen und als Folge hiervon die Innengravur im Inneren realisiert ist, wird das angesprochene weiße Licht an diesen optischen Inhomogenitäten gestreut, wobei die Streuung um so intensiver ist, je kleiner das zugehörige Bläschen bemessen ist. Anders ausgedrückt, erscheinen kleine Bläschen "weißer" als große Bläschen, die demgegenüber "grauer" sind, so dass sich über die Größe der Bläschen eine Grauabstufung erreichen lässt. Dadurch erhält die solchermaßen erzeugte Innengravur letztlich eine "Farbe", so dass das Aussehen verbessert ist und die Innengravur im Vergleich zu Bläschen gleicher Größe deutlich mehr Informationen vermittelt. Denn der Kontrast ist stark verbessert. - Dieser Kontrast lässt sich noch dadurch steigern, dass im Materialkörper Farbeinschlüsse oder farbige Bereiche definiert werden. Wenn in diesen farbigen Sektoren optische Inhomogenitäten erzeugt werden, so kann über die Größe der Bläschen letztlich die Brillanz der Farbstreuung eingestellt werden und es ergibt sich nicht nur eine Grauabstufung, sondern auch eine zusätzliche Farbabstufung in einer oder mehreren Farben. Solche Einfärbungen werden bereits in der DD 237 972 A3 beschrieben, allerdings nicht in Verbindung mit optischen Inhomogenitäten einstellbarer Größe.

Gegenstand der Erfindung ist auch die Verwendung einer Vorrichtung zum Einbringen von Suboberflächenmarkierungen in einen transparenten Materialkörper, wie sie im Anspruch 5 beschrieben wird. Eine vorteilhafte Ausgestaltung dieser Verwendung ist Gegenstand des Anspruches 6. Dabei werden die optisch unterschiedlichen Markierungen insgesamt in der Weise erzeugt, dass mit Laserpulsen vorgegebener Pulsenergie gearbeitet wird, die sich als Folge einer einstellbaren Verzögerungszeit zwischen Anregungspuls und Entladungspuls definieren lassen.

Im Ergebnis überzeugen das beschriebene Verfahren sowie die Verwendung der zugehörigen Vorrichtung zunächst einmal durch einen besonders einfachen Aufbau, weil eine Veränderung der obligatorischen Optikeinheit zur Fokussierung des Laserstrahles nicht erforderlich ist. Vielmehr wird die Pulsenergie gleichsam auf elektronischem Wege variabel eingestellt. Dabei ist es möglich, die Pulsenergie für jeden einzelnen ausgangsseitigen Laser-Monopuls unterschiedlich zu skalieren bzw. vorzugeben. Ebenso kann die Pulsdauer genauso gut wie seine Wellenlänge eine Veränderung erfahren. Das alles gibt eine Steueranlage vor.

Darüber hinaus arbeitet das Verfahren äußerst schnell, weil eine mechanische Verstellung nicht verfolgt wird. Das reduziert die Kosten des solchermaßen hergestellten Materialkörpers. Außerdem können Funktionsbeeinträchtigungen durch Änderung der optischen Eigenschaften der Optikeinheit ausgeschlossen werden, weil sich der Strahlengang von Laserpuls zu Laserpuls - auch bei geänderter Pulsenergie - nicht ändert.

Schließlich kann der Festkörperlaser bzw. Laser als solcher permanent betrieben werden. Tatsächlich steuert ja lediglich die Verzögerungszeit zwischen dem Anregungsimpuls und dem Entladungsimpuls den Ausgang. Als Folge hiervon lassen sich maximale Pulsenergien erreichen, wenn die Verzögerungszeit zwischen dem Anregungsimpuls und dem Entladungsimpuls Null ist. Hiervon ausgehend kann die Pulsenergie problemlos bis auf Werte verringert werden, die deutlich unterhalb der Zerstörschwelle im Materialkörper liegen. Auf diese Weise ist es nicht erforderlich, zusätzliche mechanische Shutter oder andere Maßnahmen vorzusehen, um ungewollte Markierungen zu verhindern. Das verringert den konstruktiven Aufwand nochmals und führt zu einer erhöhten Lebensdauer sowie stabilen thermischen sowie optischen Eigenschaften. Hierin sind die wesentlichen Vorteile zu sehen.

Im Folgenden wird die Erfindung anhand einer lediglich ein Ausführungsbeispiel darstellenden Zeichnung näher erläutert; es zeigen:

Fig. 1    eine Vorrichtung schematisch,

Fig. 2    Details des eingesetzten Lasers,

Fig. 3    ein Zeitdiagramm zur Verdeutlichung der einzelnen Impulsabfolgen,

Fig. 4    einen Einschreibvorgang zur Erzeugung der Innengravur und

Fig. 5    eine graphische Gegenüberstellung der Verzögerungszeit zwischen Anregungsimpuls und Entladungsimpuls (X-Achse) und der sich daraus ergebenden Pulsenergie (Y-Achse) für zwei verschiedene Lasermaterialien.

In den Figuren ist eine Vorrichtung zum Einbringen bzw. Einschreiben von Suboberflächenmarkierungen in einen transparenten Materialkörper 1 dargestellt. Dabei wird ein gepulster Laserstrahl 2 ins Innere des Materialkörpers 1 mit Hilfe einer Optikeinheit 3, 20 so fokussiert, dass der gepulste Laserstrahl 2 die Zerstörschwelle des Materialkörpers 1 wenigstens im jeweiligen Fokuspunkt überschreitet und so eine permanente Markierung 4 erzeugt wird. Durch die Wechselwirkung des gepulsten Laserstrahles 2 mit dem Werkstoff des Materialkörpers 1 wird im Bereich des jeweiligen Fokuspunktes oder allgemein im Bereich einer zugehörigen Strahltaille eine lokale Aufschmelzung des Werkstoffes mit Rissbildung erzeugt, die von außen makroskopisch in der Regel als "Bläschen" sichtbar ist.

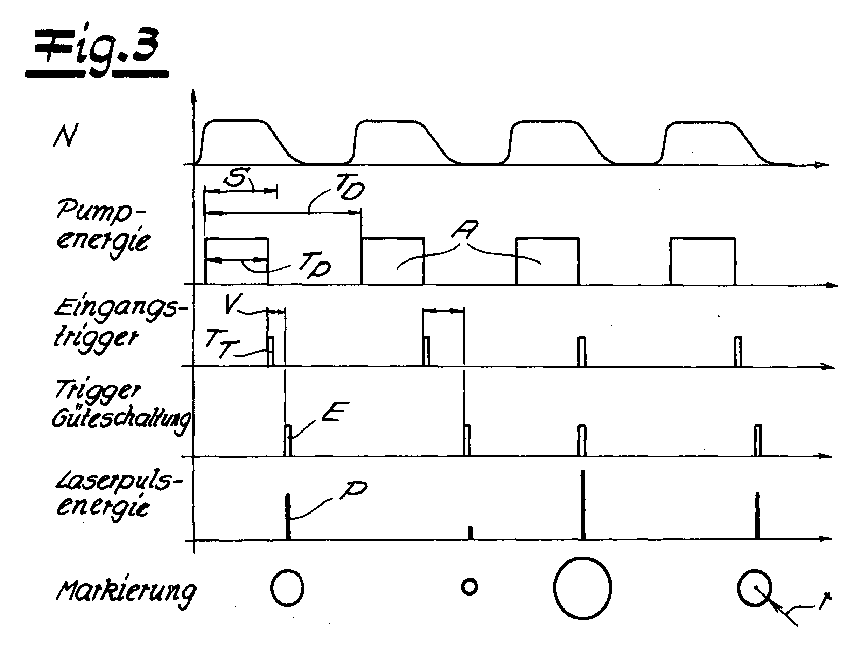

Bei der in den Materialkörper 1 jeweils eingebrachten Markierung 4 handelt es sich um eine kugelförmige Inhomogenität bzw. ein Bläschen. Dabei hängt der Radius r des zugehörigen Bläschens bzw. der Markierung 4 (vgl. Fig. 3) von der Pulsenergie respektive Laserpulsenergie P des jeweiligen Laserpulses ab. Tatsächlich werden mit Hilfe der noch im Detail zu beschreibenden Vorrichtung jeweils Laser-Monopulse, also ausgewählte Einzelpulse, mit vorgegebener Pulsenergie P erzeugt. Je höher die Pulsenergie P, desto größer der Radius r der Markierung 4. Das erkennt man besonders eindrucksvoll anhand des Zeitdiagrammes in der Fig. 3, wo im untersten Teil die Pulsenergien P einzelner Laser-Monopulse als Balken für unterschiedliche Situationen aufgetragen sind und die sich daraus ergebenden Markierungen 4 unterschiedlichen Radius r. Selbstverständlich zeigt die Fig. 3 die einzelnen Vorgänge nur grob schematisch und nicht streng maßstabsgetreu.

Die Vorrichtung zum Einbringen der Suboberflächenmarkierungen verfügt allgemein über einen Laser 5, der ausgangsseitig den gepulsten Laserstrahl 2 zur Verfügung stellt, und zwar abgelenkt mit einem Spiegel 6 zum Eintritt in die Optikeinheit 3, 20. Bei dem Laser 5 handelt es sich nicht einschränkend um einen gütegeschalteten, diodengepumpten Festkörperlaser.

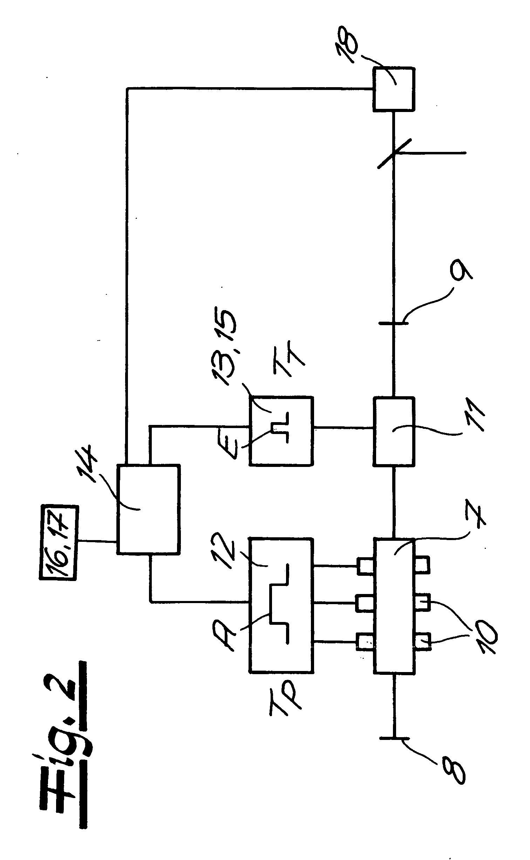

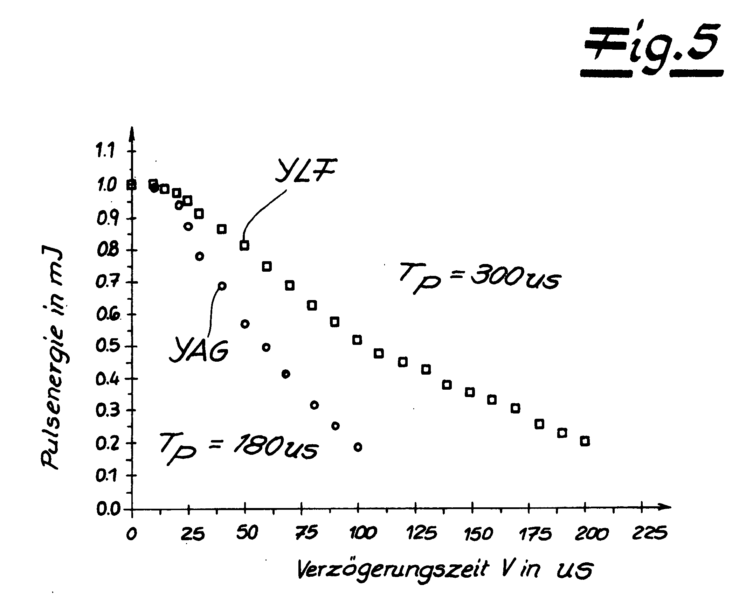

Tatsächlich wird als Lasermaterial auf einen Laserstab 7 entsprechend der Fig. 2 zurückgegriffen, welcher sich innerhalb eines Laserresonators 8, 9 befindet. Wie üblich setzt sich der Laserresonator im Wesentlichen aus zwei Resonatorspiegeln 8, 9 zusammen, von denen der eine Resonatorspiegel 9 als Ausgangsspiegel den im Inneren erzeugten Laserstrahl 2 teilweise durchlässt. Der Laserstab 7 ist nicht einschränkend aus dem Kristall Neodym-Yttrium-Aluminium-Granat (Nd: YAG) hergestellt. Auch Nd: YLF (Neodym-Yttrium-Lithium-Fluorid) kann Verwendung finden, wie in der Fig. 5 zum Ausdruck kommt.

Zum optischen Pumpen des Laserstabes 7 dienen einzelne jeweils angedeutete Dioden bzw. Halbleiterdioden 10. Diese erzeugen in dem Laserstab 7 und folglich dem Lasermaterial die für den Laservorgang notwendige Besetzungsinversion. Dazu werden die Dioden 10 mit einem Anregungsimpuls A beaufschlagt, welcher eine Pulsbreite $T_P$ im Bereich von einigen Mikrosekunden, typischerweise unterhalb von 10 Mikrosekunden, aufweist. Für die Pulsbreite $T_P$ des Anregungsimpulses A gilt, dass diese zeitlich geringer zu bemessen ist als die Lebensdauer S des oberen Laserniveaus ($^4F_{3/2}$ bei Nd: YAG). Tatsächlich beträgt die Lebensdauer S des oberen Laserniveaus in diesem Fall mehrere 100 Mikrosekunden, so dass die Forderung

$$T_P < S$$

bei Einhaltung der vorgenannten Vorgaben problemlos erfüllt werden kann.

Die Periodendauer $T_D$, d.h., der Abstand zwischen einzelnen Anregungsimpulsen A ist dabei so bemessen, dass die doppelte Lebensdauer S überschritten wird. Das kommt im oberen Teil des Zeitdiagrammes nach Fig. 3 zum Ausdruck.

Selbstverständlich kann die Periodendauer $T_D$ auch das drei- oder vierfache der besagten Lebensdauer S betragen. Entscheidend ist, dass das obere Laserniveau vor dem Beginn des nächsten Anregungsimpulses A nahezu vollständig entvölkert ist. D.h., die durch den Anregungsimpuls A aufgebaute Besetzungsinversion als Voraussetzung für den Laservorgang liegt größtenteils nicht mehr vor. Tatsächlich folgt die Besetzungsdichte N des oberen Laserniveaus in etwa dem in Fig. 3 ganz oben dargestellten Verlauf. Man erkennt, dass die Besetzungsdichte N des betreffenden Laserniveaus - der abfallenden Flanke des Anregungsimpulses A folgend - angenähert exponentiell abfällt. Dagegen verlaufen der Anstieg der Besetzungsdichte N und derjenige des Anregungsimpulses A nahezu synchron.

Auf diese Weise kann der jeweilige Laserpuls, welcher den Laser 5 verlässt, durch einen gegenüber dem Anregungsimpuls A einstellbar verzögerten Entladungsimpuls E hinsichtlich seiner Pulsenergie P verändert werden. Als Folge hiervon lassen sich jeweilige Markierungen 4 mit je nach Pulsenergie P unterschiedlichen optischen Eigenschaften erzeugen. Tatsächlich korrespondieren die unterschiedlichen Pulsenergien P zu den Bläschen mit variierendem Radius r, wie eingangs bereits erläutert worden ist und im unteren Teil des Zeitdiagrammes nach Fig. 3 zum Ausdruck kommt.

Zwischen dem Anregungsimpuls A und dem Entladungsimpuls E stellt sich also eine Verzögerungszeit V ein, die sich zwischen der abfallenden Flanke des Anregungsimpulses A und der ansteigenden Flanke des Entladungsimpulses E zeitlich erstreckt (vgl. Fig. 3 Mitte). Die besagte Verzögerungszeit V mag im Bereich zwischen 0 und 200 Mikrosekunden angesiedelt sein, so dass der Entladungsimpuls E letztlich mit der (exponentiell abfallenden) Flanke der Besetzungsdichte N des oberen Laserniveaus zusammenfällt (vgl. hierzu auch Fig. 5). Je nachdem, wann der Entladungsimpuls E dafür sorgt, dass sich die im Laserstab 7 befindliche Energie entladen kann und folgerichtig ein Laserpuls den Laserresonator 8, 9 verlässt, nehmen an diesem Laservorgang mehr oder minder viele Elektronen des oberen Laserniveaus entsprechend der Besetzungsdichte N teil. Als Folge hiervon variiert die Pulsenergie P, wie man in der Fig.

3 eindrucksvoll erkennt.

Im Detail wird der Entladungsimpuls E zur Veränderung der Pulsenergie mit Hilfe einer Güteschaltung 11 in dem Laserresonator 8, 9 erzeugt. Bei dieser Güteschaltung 11 handelt es sich um einen aktiven Lichtschalter, welcher akusto-optisch oder elektro-optisch wirkt und als Modulator der Resonatorverluste fungiert. Im Ausführungsbeispiel ist die Güteschaltung 11 als Pockels-Zelle 11 ausgeführt. Eine solche Pockels-Zelle 11 dient der Einzelpulsselektion der dem jeweiligen Anregungsimpuls A folgenden Laserstrahlung. D.h., mit Hilfe der Güteschaltung 11 werden einzelne Impulse ausgangsseitig des Lasers 5, sogenannte Laser-Monopulse, erzeugt.

Dazu macht sich die Güteschaltung bzw. Pockels-Zelle 11 den sogenannten Pockels- oder Kerr-Effekt zunutze, welcher auf der feldinduzierten Doppelbrechung in Kristallen bzw. Flüssigkeiten beruht. Anders ausgedrückt, lässt sich in einer Pockels-Zelle 11 durch ein elektrisches Feld die Polarisationsrichtung des einfallenden Lichtes ändern und mit Hilfe eines Analysators auswählen. Wenn keine Spannung an der Pockels-Zelle 11 anliegt, so ist sie optisch isotrop und der solchermaßen realisierte elektro-optische Schalter lässt kein Licht hindurch. Bei anliegendem Feld ist das Material jedoch doppelbrechend und kann nicht vollständig durch den Analysator gesperrt werden.

Jedenfalls wirkt die Pockels-Zelle bzw. die Güteschaltung 11 innerhalb des Laserresonators 8, 9 wie ein extrem schneller optischer Schalter und lässt nur bei anliegender Spannung bzw. einer Beaufschlagung mit einem Entladungsimpuls E der Dauer $T_T$ einen Laserpuls ausgangsseitig entstehen. Anders ausgedrückt, kann nur bei geöffneter Pockels-Zelle 11 die im Laserstab 7 gespeicherte Energie den Laserresonator 8, 9 als Laserpuls der Pulsenergie P verlassen.

Der Entladungsimpuls E der Zeitdauer $T_T$ wird in einer Rechnereinheit 14 erzeugt. Tatsächlich dient die abfallende Flanke des Anregungsimpulses A dazu, einen Eingangstriggerimpuls der Dauer $T_T$ zu definieren, welcher nach der Verzögerungszeit V als Entladungsimpuls E die Pockels-Zelle 11 während der Dauer $T_T$ öffnet. Dadurch entsteht der gewünschte Laserpuls (vgl. Fig. 3).

Die Güteschaltung 11 bzw. Pockels-Zelle wird also mit dem Entladungsimpuls E beaufschlagt, und zwar innerhalb der Pulsdauer $T_T$. Da zwischen dem Anregungsimpuls A und dem Entladungsimpuls E die Verzögerungszeit V vorliegt, findet der Laservorgang - je nach Verzögerungszeit V - zu Zeiten statt, an denen die Besetzungsdichte N des oberen Laserniveaus bereits mehr oder minder abgenommen hat. Dadurch lässt sich - wie beschrieben - die Pulsenergie P des ausgangsseitigen Laser-Monopulses variieren. Der Anregungsimpuls A zur Erzeugung der Besetzungsinversion im Lasermaterial bzw. dem Laserstab 7 wird dabei als Startimpuls für die einstellbare Verzögerungszeit V bis zum Beginn des Entladungsimpulses E genutzt. Tatsächlich dient hierzu die abfallende Flanke des Anregungsimpulses A.

Die Dioden 10 zum optischen Pumpen des Laserstabes 7 werden von einer Ansteuereinheit 12 beaufschlagt. Demgegenüber erhält die Güteschaltung bzw. Pockels-Zelle 11 ihre notwendige Schaltenergie von einer weiteren Ansteuereinheit 13. Beide Ansteuereinheiten 12, 13 werden von einer Rechnereinheit 14 gesteuert. Die Rechnereinheit 14 beaufschlagt ihrerseits einen Triggerimpulsgeber 15, welcher die Pulsdauer $T_T$ des Entladungsimpulses E bestimmt.

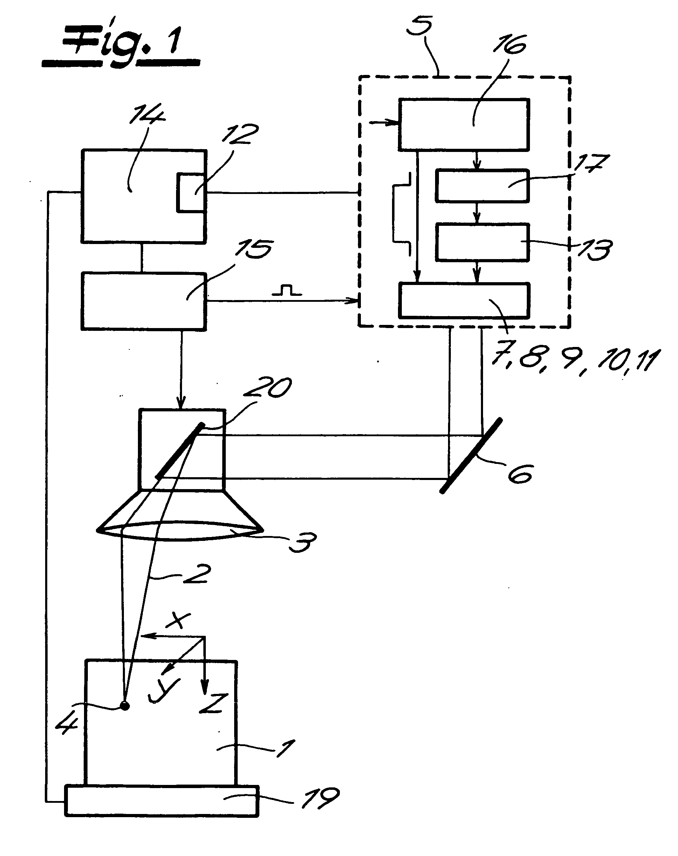

Zusätzlich ist noch eine Energieversorgung 16, 17 realisiert. Die Rechnereinheit 14 sowie der Triggerimpulsgeber 15 und schließlich die Steuereinheiten 12, 13 können zu einer Steueranlage 12, 13, 14, 15 zusammengefasst sein. Hierzu mag auch die Energieversorgungseinheit 16, 17 gehören, die im Rahmen der Darstellung jedoch als Bestandteil des Lasers 5 gezeigt ist (vgl. Fig. 1 und 2).

Mit Hilfe eines Leistungsmessers 18 kann die Pulsenergie P der einzelnen Laser-Monopulse ermittelt werden. Wenn dieser Leistungsmesser 18 an die Steueranlage 12, 13, 14, 15 bzw. die Rechnereinheit 14 angeschlossen ist, lässt sich auf diese Weise eine Regelung der Pulsenergie P nach bestimmten Vorgaben realisieren. Tatsächlich hängt bekanntermaßen die Pulsenergie P von der Verzögerungszeit V zwischen dem Anregungsimpuls A und dem Entladungsimpuls E ab. Je nach der mit dem Energiemesser bzw. Leistungsmesser 18 gemessenen Pulsenergie P kann nun die Verzögerungszeit V von der Rechnereinheit 14 bzw. der Steueranlage 12, 13, 14, 15 so lange verändert werden, bis die Pulsenergie P den Vorgaben entspricht oder einem in der Rechnereinheit 14 abgelegten Programm folgt. Selbstverständlich lassen sich solche Vorgehensweisen dem eigentlichen Markierungsvorgang vorschalten, so dass auf diese Weise die gesamte Anlage quasi geeicht werden kann. D.h., zu jeder Verzögerungszeit V wird die korrespondierende Pulsenergie P in einem Speicher der Rechnereinheit 14 abgelegt und bei Bedarf abgefragt und in eine Markierung 4 der gewünschten Größe bzw. mit dem gewünschten Radius r umgesetzt.

Um nun Markierungen 4 in unterschiedlichen Raumpositionen im Materialkörper 1 zu erzeugen, wird der Materialkörper 1 von einer Positioniereinheit 19 aufgenommen, die sich in X-, Y- und Z-Richtung bewegen lässt. Die Positioniereinheit 19 ist an die Rechnereinheit 14 angeschlossen und folgt einem dort hinterlegten Programm. Schließlich gehört zu der Optikeinheit 3, 20 eine sogenannte F-Teta-Linse 20, welche - gesteuert von der Rechnereinheit 14 - eventuelle Änderungen der Stahltaille infolge von Aberration des gesamten optischen Pfades ausgleicht.

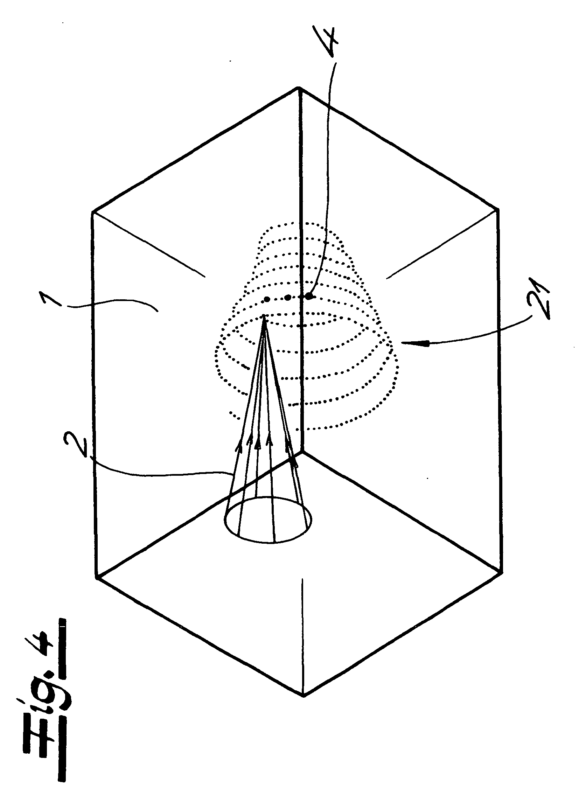

Durch Ansteuern der Positioniereinheit 19 mit Hilfe der Rechnereinheit 14 lassen sich die Markierungen 4 räumlich mit ggf. unterschiedlichem Radius r in den Materialkörper 1 einschreiben. Dadurch entsteht eine Innengravur 21 (vgl. Fig. 4) mit unterschiedlich großen Markierungen 4. Insgesamt beträgt die Ausgangswellenlänge des Lasers 532 nm bei einer Halbwertsbreite der Pulse von ca. 7 ns. Die maximale Pulsenergie P liegt bei ca.

1 mJ bei einer Wiederholrate im Bereich von 1 bis 3 kHz.

Bei Betrachtung der Fig. 5 erkennt man, dass die Pulsenergie P bei einem Laserstab 7 aus Nd:YLF (Kästchen) tendenziell mit wachsender Verzögerungszeit V weniger abnimmt als bei einem Laserstab 7 aus Nd:YAG (Kreise). Die jeweils unterschiedliche Dauer $T_P$ des Anregungsimpulses A ($T_P$ = 300 Mikrosekunden bei Nd:YLF bzw. $T_P$ = 180 Mikrosekunden bei Nd:YAG) trägt hierbei den variierenden Lebensdauern S der jeweiligen oberen Laserniveaus Rechnung.

## Patentansprüche

1. Verfahren zum Einbringen von Suboberflächenmarkierungen in einen transparenten Materialkörper (1), Wonach

   - mittels jeweiliger Anregungsimpulse (A) eine optische Pumpquelle für ein Lasermaterial beaufschlagt wird, um im Lasermaterial Besetzungsinversion von einzelnen Laserniveaus zu erzeugen, wonach ferner
   - ein hierdurch erzeugter gepulster Laserstrahl (2) ins Innere des Materialkörpers (1) so fokussiert wird, dass der Laserstrahl (2) die Zerstörschwelle des Materialkörpers (1) wenigstens im jeweiligen Fokuspunkt unter Bildung einer permanenten Markierung (4) überschreitet, und wonach
   - einzelne Markierungen (4) in Folge einer Relativbewegung zwischen dem Laserstrahl (2) und dem Materialkörper (1) eine frei vorwählbare Innengravur (21) formen,

   **dadurch gekennzeichnet, dass**

   - ein Entladungsimpuls (E) mit Hilfe einer Güteschaltung (11) optische Verluste in einem Laserresonator (8, 9) moduliert, wobei
   - der jeweilige Laserpuls durch den gegenüber dem Anregungsimpuls (A) einstellbar verzögerten Entladungsimpuls (E) hinsichtlich seiner Pulsenergie (P) verändert wird und somit Markierungen (4) mit je nach Pulsenergie (P) unterschiedlichen optischen Eigenschaften erzeugt, und wobei
   - eine abfallende Flanke des Anregungsimpulses (A) als Startimpuls für die einstellbare Verzögerungszeit (V) bis zum Beginn des Entladungsimpulses (E) genutzt wird.

2. Verfahren nach Anspruch 1, **dadurch gekennzeichnet, dass** als Güteschaltung (11) ein aktiver Lichtschalter, ein akusto-optischer oder elektro-optischer Modulator, beispielsweise eine Pockels-Zelle (11), eingesetzt wird.

3. Verfahren nach Anspruch 1 oder 2, **dadurch gekennzeichnet, dass** einzelne Laser-Monopulse mit durch die Verzögerungszeit (V) vorgegebener Pulsenergie (P) erzeugt werden.

4. Verfahren nach einem der Ansprüche 1 bis 3, **dadurch gekennzeichnet, dass** die in den Materialkörper (1) jeweils eingebrachte Markierung (4) zu einer kugelförmigen Inhomogenität korrespondiert, deren Radius (r) in Abhängigkeit von der Pulsenergie (P) variiert.

5. Verwendung einer Vorrichtung zum Einbringen von Suboberflächenmarkierungen in einen transparenten Materialkörper (1), mit einem gepulsten Laser (5) sowie einer Optik-Einheit (3, 20) welche einen gepulsten Laserstrahl (2) ins Innere des Materialkörpers (1) so fokussiert, dass der Laserstrahl (2) die Zerstörschwelle des Materialkörpers (1) wenigstens im jeweiligen Fokuspunkt unter Bildung einer permanenten Markierung (4) überschreitet, wobei

   - einzelne Markierungen (4) in Folge einer Relativbewegung zwischen dem Laserstrahl (2) und dem Materialkörper (1) eine frei wählbare Innengravur (21) formen, und wobei
   - eine optische Pumpquelle für ein Lasermaterial des Lasers (5) mittels jeweiliger Anregungsimpulse beaufschlagt wird, um im Lasermaterial Besetzungsinversion von einzelnen Laserniveaus zu erzeugen,

   **dadurch gekennzeichnet, dass**

   - ein Entladungsimpuls (E) mit Hilfe einer optischen Güteschaltung (11) im Laserresonator (8, 9) optische Verluste in dem Laserresonator (8, 9) moduliert, wobei
   - der jeweilige Laserpuls durch den gegenüber dem Anregungsimpuls (A) einstellbar verzögerten Entladungsimpuls (E) hinsichtlich seiner Pulsenergie (P) verändert wird, so dass
   - Laserpulse unterschiedlicher und vorgebbarer Pulsenergie (P) den Laserresonator (8, 9) verlassen, um jeweils Markierungen (4) mit je nach Pulsenergie (P) verschiedenen optischen Eigenschaften im Materialkörper (1) zu erzeugen, und wobei
   - eine abfallende Flanke des Anregungsimpulses (A) als Startimpuls für die einstellbare Verzögerungszeit (V) bis zum Beginn des Entladungsimpulses (E) genutzt wird.

6. Verwendung nach Anspruch 5, **dadurch gekennzeichnet, dass** die Güteschaltung (11) als aktiver Lichtschalter, z. B. Pockels-Zelle (11), ausgeführt ist.

## Claims

1. A method for the introduction of sub-surface markings into a transparent material body (1), whereby

   - respective excitation pulses (A) impinge upon an optical pump source for a laser material so as to generate a population inversion of individual laser levels in the laser material, whereby furthermore
   - a pulsed laser beam (2) hereby generated is focused into the interior of the material body (1) such that the laser beam (2) exceeds the damage threshold of the material body (1), at least at the respective focal point, with the formation of a permanent marking (4), and whereby
   - as a result of a relative movement between the laser beam (2) and the material body (1) individual markings (4) form a freely selectable internal engraving (21),

   **characterised in that**

   - with the aid of a Q-switch (11) a discharge pulse (E) modulates optical losses in a laser resonator (8, 9), wherein
   - the respective laser pulse is modified by the discharge pulse (E), adjustably delayed relative to the excitation pulse (A), with respect to its pulse energy (P), and thus generates markings (4) with optical properties differing in accordance with the pulse energy (P), and wherein
   - a trailing edge of the excitation pulse (A) is used as a starting pulse for the adjustable delay time (V) up to the start of the discharge pulse (E).

2. The method in accordance with Claim 1, **characterised in that** an active light switch, an acousto-optical or electro-optical modulator, for example a Pockels cell (11), is deployed as a Q-switch (11).

3. The method according to Claim 1 or 2, **characterised in that** individual laser monopulses are generated with pulse energies (P) specified by the delay time (V).

4. The method according to one of the Claims 1 to 3, **characterised in that** the marking (4) introduced in each case into the material body (1) corresponds to a spherical inhomogeneity, the radius (r) of which varies as a function of the pulse energy (P).

5. An application of a device for the introduction of sub-surface markings into a transparent material body (1), with a pulsed laser (5), and also an optical unit (3, 20), which focuses a pulsed laser beam (2) into the interior of the material body (1) such that the laser beam (2) exceeds the damage threshold of the material body (1), at least at the respective focal point, with the formation of a permanent marking (4), whereby

   - as a result of a relative movement between the laser beam (2) and the material body (1) individual markings (4) form a freely selectable internal engraving (21), and wherein
   - respective excitation pulses impinge upon an optical pump source for a laser material of the laser (5) so as to generate a population inversion of individual laser levels in the laser material,

   **characterised in that**

   - with the aid of an optical Q-switch (11) in the laser resonator (8, 9) a discharge impulse (E) modulates optical losses in the laser resonator (8, 9), wherein
   - the respective laser pulse is modified by the discharge pulse (E), adjustably delayed relative to the excitation pulse (A), with respect to its pulse energy (P), such that
   - laser pulses of differing and specifiable pulse energy (P) exit the laser resonator (8, 9), so as to generate in each case markings (4) with optical properties in the material body (1) varying according to the pulse energy (P), and wherein
   - a trailing edge of the excitation pulse (A) is used as a starting pulse for the adjustable delay time (V) up to the start of the discharge pulse (E).

6. The application in accordance with Claim 5, **characterised in that** the Q-switch (11) is embodied as an active light switch, e.g. a Pockels cell (11).

## Revendications

1. Procédé pour l'introduction de marquages de sous-surfaces dans un corps de matériau (1) transparent, selon lequel

   - une source de pompage optique pour un milieu actif laser est alimentée au moyen d'impulsions d'excitation (A) respectives afin de générer dans le milieu actif laser de l'inversion d'occupation de niveaux laser individuels, selon lequel
   - un faisceau laser (2) pulsé et généré de cette façon est focalisé à l'intérieur du corps de matériau (1) de telle sorte que le faisceau laser (2) dépasse le seuil de destruction du corps de matériau (1) au moins au point focal respectif en formant un marquage (4) permanent, et selon lequel
   - des marquages (4) individuels forment du fait d'un déplacement relatif entre le faisceau laser (2) et le corps de matériau (1) une gravure intérieure (21) pouvant être présélectionnée librement,

**caractérisé en ce que**

- une impulsion de décharge (E) module à l'aide d'un circuit de qualité (11) des pertes optiques dans un résonateur laser (8, 9),
- l'impulsion laser respective étant modifiée en ce qui concerne son énergie d'impulsion (P) par l'impulsion de décharge (E) retardée de façon réglable par rapport à l'impulsion d'excitation (A) et générant ainsi des marquages (4) avec des propriétés optiques différentes en fonction de l'énergie d'impulsion (P), et
- un flanc décroissant de l'impulsion d'excitation (A) étant utilisé comme impulsion de démarrage pour la temporisation (V) réglable jusqu'au début de l'impulsion de décharge (E).

2. Procédé selon la revendication 1, **caractérisé en ce qu'**un interrupteur lumineux actif, un modulateur acousto-optique ou électro-optique, par exemple une cellule de Pockels (11), est utilisé comme circuit de qualité (11).

3. Procédé selon la revendication 1 ou 2, **caractérisé en ce que** des monoimpulsions laser individuelles sont générées avec l'énergie d'impulsion (P) prédéfinie par la temporisation (V).

4. Procédé selon l'une quelconque des revendications 1 à 3, **caractérisé en ce que** le marquage (4) respectivement introduit dans le corps de matériau (1) correspond à une inhomogénéité sphérique, dont le rayon (r) varie en fonction de l'énergie d'impulsion (P).

5. Utilisation d'un dispositif pour introduire des marquages de sous-surfaces dans un corps de matériau (1) transparent, comprenant un laser (5) pulsé et une unité d'optique (3, 20), qui focalise un faisceau laser (2) pulsé à l'intérieur du corps de matériau (1) de telle sorte que le faisceau laser (2) dépasse le seuil de destruction du corps de matériau (1) au moins au point focal respectif en formant un marquage (4) permanent,

- des marquages (4) individuels formant du fait d'un déplacement relatif entre le faisceau laser (2) et le corps de matériau (1) une gravure intérieure (21) pouvant être choisie librement, et
- une source de pompage optique pour un matériau de laser du laser (5) étant alimentée au moyen d'impulsions d'excitation respectives pour générer dans le matériau de laser une inversion d'occupation de niveaux laser individuels,

**caractérisée en ce que**

- une impulsion de décharge (E) module à l'aide d'un circuit de qualité (11) optique dans le résonateur laser (8, 9) des pertes optiques dans le résonateur laser (8, 9),
- l'impulsion de laser respective étant modifiée en ce qui concerne son énergie d'impulsion (P) par l'impulsion de décharge (E) retardée de façon réglable par rapport à l'impulsion d'excitation (A), de sorte que
- des impulsions laser d'énergie (P) différente et prédéfinissable quittent le résonateur laser (8, 9), afin de générer à chaque fois des marquages (4) avec des propriétés optiques différentes en fonction de l'énergie d'impulsion (P) dans le corps de matériau (1), et
- un flanc décroissant de l'impulsion d'excitation (A) étant utilisé comme impulsion de démarrage pour la temporisation (V) réglable jusqu'au début de l'impulsion de décharge (E).

6. Utilisation selon la revendication 5, **caractérisée en ce que** le circuit de qualité (11) est conçu sous forme d'interrupteur lumineux actif, par exemple une cellule de Pockels (11).

# Fig.1

Fig. 2

**Fig.3**

N

Pumpenergie

$S$     $T_D$

$A$

$T_P$

Eingangstrigger

$V$

$T_T$

Trigger
Güteschaltung

$E$

Laserpulsenergie

$P$

Markierung     ○    ∘    ○    ○   $r$

EP 1 717 059 B1

Fig. 4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4467172 A
- DD 237972 A3
- US 5637244 A
- US 4092518 A
- US 6490299 B1
- DE 19925801 B4